# EUROPÄISCHE PATENTSCHRIFT

(11) **EP 2 593 303 B1**
(45) Veröffentlichungstag und Bekanntmachung des Hinweises auf die Patenterteilung: **20.04.2016**
(21) Anmeldenummer: 11729583.2
(22) Anmeldetag: 01.06.2011
(51) Int. Cl.: B32B 27/08, B32B 7/02, B32B 3/24, B32B 27/32, B32B 27/34, B32B 27/36

(54) **VERFAHREN ZUR HERSTELLUNG EINES AUS WENIGSTENS EINER VERBUNDFOLIE BESTEHENDEN FOLIENVERBUNDES**
PROCESS FOR MANUFACTURING A FILM COMPOSITE CONSISTING OF AT LEAST ONE COMPOSITE FILM
PROCÉDÉ DE FABRICATION DE COMPOSITES DE FILMS CONSTITUÉS D'AU MOINS UN FILM COMPOSITE

(30) Priorität: 15.07.2010 DE 102010031362
(43) Veröffentlichungstag der Anmeldung: 22.05.2013
(73) Patentinhaber: Robert Bosch GmbH, 70442 Stuttgart (DE)
(72) Erfinder: EKENHORST, Dirk, 49076 Osnabrück (DE)
(86) Internationale Anmeldenummer: PCT/EP2011/059032
(87) Internationale Veröffentlichungsnummer: WO 2012/007223

(56) Entgegenhaltungen:
- WO-A1-03/009997
- DE-A1- 2 337 560
- US-A- 4 935 271
- US-A- 5 296 291
- US-A1- 2001 049 001

## Beschreibung

### Stand der Technik

Die Erfindung betrifft ein Verfahren zur Herstellung eines aus wenigstens einer Verbundfolie bestehenden Folienverbundes gemäß dem Oberbegriff des Anspruchs 1.

Eine Verbundfolie für Schlauchbeutelpackungen ist aus der DE 2 337 560 A bekannt. Bei der bekannten Verbundfolie ist eine Siegelschicht vorgesehen, die auf beiden Seiten jeweils mit einer aus nicht siegelfähigem Material bzw. einen höheren Schmelzpunkt aufweisenden Material bestehenden Schicht verbunden ist. In einer den höheren Schmelzpunkt aufweisenden Schicht sind Perforationen ausgebildet, die dazu dienen, die ansonsten an sich nicht siegelfähige Schicht siegelbar zu gestalten. Hinweise hinsichtlich der genauen Anordnung der Perforationen, insbesondere im Zusammenhang mit der Ausbildung einer Faltkante an der Schlauchbeutelpackung, sind der Schrift jedoch nicht entnehmbar.

Die US 4,935,271 offenbart eine Verbundfolie zum Verpacken von Lebensmitteln, bei der eine Perforation aufweisende Schicht aus Polypropylen vorgesehen ist, auf die eine siegelfähige Schicht auflaminiert ist. Der genannten Schrift ist lediglich entnehmbar, dass eine größere Anzahl von Perforationen vorgesehen ist, ohne jedoch deren genaue Anzahl und Anordnung zu offenbaren.

In der US 5,296,291 sind Weiterentwicklungen der aus der US 4,935,271 bekannten Verbundfolien offenbart. Auch darin sind keine genauen Angaben bezüglich der Anordnung und Anzahl der Perforationen zu entnehmen.

Zuletzt ist aus der WO 03/009997 A1 eine Verbundfolie für Verpackungen von Lebensmittel bekannt, die insbesondere zum Abdecken von Schalen für Fertiggerichte dienen. Auch bei dieser Verbundfolie ist es vorgesehen, in einer Schicht eine Vielzahl von Perforationen vorzusehen, die beim Erhitzen des Inhalts der Schale beispielsweise in einer Mikrowelle dazu dient, dass über die perforierte Schicht ein Druckausgleich nach außen erfolgen kann. Der genannten Schrift sind ebenfalls keine Angaben hinsichtlich der Anordnung und Anzahl der Perforationen entnehmbar.

Schlauchbeutelpackungen werden dadurch hergestellt, dass zwei gegenüberliegende Randbereiche einer Verbundfolie, oder aber zwei getrennte Verbundfolien, gegeneinandergelegt werden, wobei unter Einwirkung von Wärme und Druck die Randbereiche an den gegeneinander gelegten Siegelschichten der Verbundfolie miteinander verschweißen.

Die Verbundfolien bestehen dabei aus mehreren miteinander verbundenen Schichten mit unterschiedlichen Schmelzpunkten. Beim Versiegeln schmelzen die Folienschichten mit den niedrigsten Schmelzpunkt zunächst auf. Es ist daher üblich, beim Verschweißen von Verbundfolien auf der Packungsinnenseite diejenigen Schichten als Siegelschichten anzuordnen, die den niedrigsten Schmelzpunkt aufweisen.

Aufgrund wirtschaftlicher Überlegungen kommt hierbei als Siegelschicht, welche gleichzeitig die innere Schicht der Verpackung ausbildet, insbesondere Polyethylen (PE) in Frage. Andere Kunststoffe mit einem gegenüber PE höherem Schmelzpunkt, wie beispielsweise Polyamid (PA) oder Polyethylenterephthalat (PET) kommen als Siegelschicht nicht zum Einsatz, da diese Polymere einen zu hohen Schmelzpunkt aufweisen, so dass sie im Verpackungsbereich nicht wirtschaftlich verschweißt werden können bzw. ihre Schweißnahtfestigkeit nicht ausreichend ist. Darüber hinaus ist der Einsatz von derartigen Kunststoffen wie PA oder PET auf der Packungsinnenseite bei gleichzeitiger Verwendung von Kunststoffen mit einem im Vergleich dazu niedrigeren Schmelzpunkt nicht möglich, da dann zunächst die Schicht mit dem niedrigeren Schmelzpunkt aufschmelzen würde, ohne dass es zu einem Aufschmelzen der Schicht an der Packungsinnenseite mit dem relativ dazu höheren Schmelzpunkt kommt.

Zusätzlich wird erwähnt, dass der Einsatz von insbesondere Polyethylen (PE) als innerste, mit einem Füllgut in Kontakt stehende Packstoffschicht als Verpackung für sensible Lebensmittel, wie zum Beispiel Mineralwasser, aufgrund seiner hohen Migrationsfähigkeit nicht geeignet ist.

### Offenbarung der Erfindung

Ausgehend von dem dargestellten Stand der Technik liegt der Erfindung die Aufgabe zugrunde, ein Verfahren zur Herstellung eines aus wenigstens einer Verbundfolie bestehenden Folienverbundes nach dem Oberbegriff des Anspruchs 1 derart weiterzubilden, dass als innere Schichten der Verpackungen Materialien zum Einsatz kommen können, die in Bezug auf die verschiedenen Schichten nicht zwangsläufig den niedrigsten Schmelzpunkt aufweisen. Insbesondere soll es damit ermöglicht werden, anstelle von Polyethylen (PE) alternative Polymere zu verwenden. Gleichzeitig sollen dichte Schlauchbeutelpackungen ausgebildet werden können. Insbesondere zur Bildung von dichten Schlauchbeutelpackungen, bei denen der Austritt von insbesondere flüssigem oder pastösem Füllgut sicher verhindert werden muss, ist es vorgesehen, dass zumindest zwei Reihen von Durchgangsöffnungen vorgesehen sind, dass zwischen den Reihen eine streifenförmige Zone ohne Durchgangsöffnungen ausgebildet ist und dass die beiden Reihen von Durchgangsöffnungen derart zueinander ausgerichtet sind, dass bei einem Umfalten der Verbundfolie im Bereich der streifenförmigen Zone und Gegeneinanderlegen der beiden Abschnitte unter Bildung einer Faltkante die Durchgangsöffnungen der beiden gegeneinander gelegten zweiten Schichten in Überdeckung zueinander angeordnet sind. Weiterhin sind in der zweiten Schicht eine Vielzahl von Durchgangsöffnungen ausgebildet, die in gleichmäßigen Abständen zueinander angeordnet sind. Durch diese Ausbildung lässt sich eine erfindungsgemäße Verbundfolie insbesondere als endlose Packstoffbahn bevorraten und besonders einfach verarbeiten.

Der Erfindung liegt dabei die Idee zugrunde, als mit dem Füllgut in Kontakt stehender Innenschicht ein Material mit einem gegenüber der zuerst aufschmelzenden (Siegel-) Schicht relativ dazu höherem Schmelzpunkt, insbesondere Polyethylenterephthalat (PET), zu verwenden, wobei diese Innenschicht wenigstens eine Durchgangsöffnung aufweist, die von einer Siegelschicht mit einem relativ dazu geringerem Schmelzpunkt überdeckt ist. Die dichte Verbindung im Bereich der Siegel- bzw. der Schweißnaht wird insbesondere auch dadurch erzielt, dass beim Aufschmelzen der Siegelschicht das Material der Siegelschicht durch die Durchgangsöffnung der PET-Innenschicht dringt und mit der gegenüberliegenden Siegelschicht in Wirkverbindung gelangt. Gleichzeitig brechen, je nach Schweißparameter und Siegelwerkzeug, die Durchgangsöffnungen in der innersten Schicht unter der Einwirkung des Drucks der Siegelbacken auf, so dass eine vorzugsweise vollflächige, insbesondere linienförmige Verbindungszone im Bereich der Durchgangsöffnungen erzielt wird.

Vorteilhafte Weiterbildungen sind in den Unteransprüchen angegeben. Die Verwendung von PET als Innenschicht insbesondere für Verpackungen hat den Vorteil, dass bei sensiblen Lebensmitteln, wie z.B. Wasser, eine derartige Verbundfolie dazu geeignet ist, derartige sensible Lebensmittel aufgrund der sehr geringen Mikrationsfähigkeit von PET zu verpacken.

Besonders bevorzugt ist es, wenn zwischen der Siegelschicht und der ersten Schicht zumindest eine als Barriereschicht wirkende dritte Schicht angeordnet ist. Eine derartige Barriereschicht kann beispielsweise den Eintritt von UV-Strahlung in eine Verpackung verhindern und somit die Haltbarkeit des Nahrungs- bzw. Lebensmittels vergrößern.

Zufriedenstellende Ergebnisse hinsichtlich der Eigenschaften von Verpackungen bei Schlauchbeuteln werden erzielt, wenn die Siegelschicht aus Polyethylen (PE) besteht und eine Schichtdicke von 30µm bis 100µm, bevorzugt zwischen 50µm und 90µm aufweist und die zweite Schicht eine Dicke von 8µm bis 20µm, bevorzugt zwischen 12µm und 18µm aufweist.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine als Schlauchbeutelpackung ausgebildete Verpackung für ein Lebens- bzw. Nahrungsmittel in einer perspektivischen Ansicht,
- Fig. 2: einen Schnitt in der Ebene II-II der Fig. 1,
- Fig. 3: eine Darstellung einer Verbundfolie mit ihren unterschiedlichen Schichten zur Verwendung bei einer Verpackung gemäß der Fig. 1 in einem Randbereich, der mittels einer Schweißnaht verbunden wird, in perspektivischer Ansicht,
- Fig. 4: die Darstellung eines Teils der Verbundfolie gemäß Fig. 3 im Bereich ihrer Siegel- sowie Innenschicht in perspektivischer Ansicht und
- Fig. 5: eine vereinfachte Darstellung einer Vorrichtung zur Herstellung von Durchgangsöffnungen an einer PET-Innenschicht.

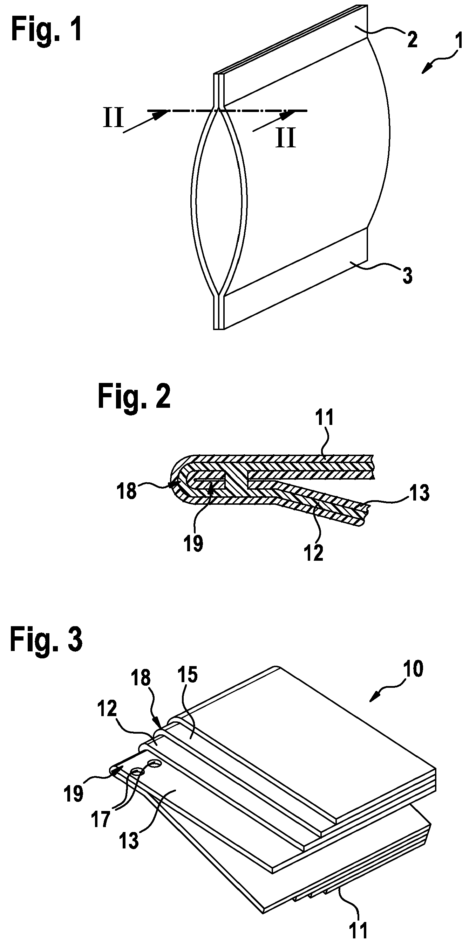

In der Fig. 1 ist eine insbesondere in der Lebensmittel- bzw. Nahrungsmittelindustrie einsetzbare Verpackung 1 dargestellt. Die Verpackung 1 dient hierbei insbesondere der Verpackung von flüssigem, pastösem oder stückigem Füllgut, wie beispielsweise Milch, Wasser, Ketchup, oder ähnlichem. Besonders bevorzugt ist der Einsatz der Verbundfolie zum Verpacken von sensorisch sensiblen Lebensmitteln, wie zum Beispiel Wasser.

Die Verpackung 1 ist im Ausführungsbeispiel kissenartig ausgebildet und weist insbesondere eine obere, streifenförmige Schweißnaht 2 und eine untere, ebenfalls streifenförmige Schweißnaht 3 auf. Eine derartige Verpackung 1 wird in der Praxis mittels sogenannter Schlauchbeutelmaschinen hergestellt, bei der wenigstens eine als endlose Packstoffbahn bevorratete Verbundfolie taktweise oder kontinuierlich abgezogen, gefaltet, befüllt und verschweißt wird. Hierbei arbeiten derartige Schlauchbeutelmaschinen entweder mit einer einzigen Packstoffbahn, bei der die beiden in Längsrichtung bezüglich der Vorzugsrichtung beabstandeten Endbereiche gegeneinander gelegt werden, oder aber mit zwei separaten Packstoffbahnen, welche in Überdeckung gebracht werden. In beiden Fällen sind somit weitere, in der Darstellung der Fig. 1 nicht dargestellte, sogenannte Längsschweißnähte erforderlich.

Ergänzend wird erwähnt, dass es anstelle der kissenartigen Verpackungen 1 selbstverständlich auch in den Rahmen der Erfindung fällt, andersartig geformte Verpackungen 1, zum Beispiel in Form von Standbeutelpackungen, pyramidenartigen Packungen usw. vorzusehen bzw. zu verwenden. Wesentlich ist lediglich, dass alle derartigen Verpackungen 1 Schweißnähte 2, 3 aufweisen.

Das Herstellen der Schweißnähte 2 und 3 erfolgt durch sogenannte, aus dem Stand der Technik bekannte Siegelwerkzeuge, die Siegelbacken aufweisen, zwischen denen die beiden gegenüberliegenden Abschnitte der wenigstens einen Packstoffbahn unter Einwirkung von Wärme und Druck miteinander verschweißt werden.

Die Verpackung 1 wird unter Verwendung einer in der Fig. 3 dargestellten, erfindungsgemäßen Verbundfolie 10 hergestellt, die die oben genannte Packstoffbahn darstellt. Die Verbundfolie 10 weist zumindest drei unterschiedliche Schichten 11 bis 13 auf. Als äußere Schicht 11 der Verpackung 1, die eine erste Schicht 11 darstellt, findet dabei bevorzugt, jedoch nicht zwingend Polyethylenterephthalat (PET) Verwendung. Alternativ hierzu ist beispielsweise auch der Einsatz von Polyamid (PA) denkbar. An die erste (äußere) Schicht 11 schließt sich eine zweite Schicht als Siegelschicht 12 an, welche insbesondere aus Polyethylen (PE) besteht. Die äußere Schicht 11 weist einen höheren Schmelzpunkt auf als die Siegelschicht 12. An die Siegelschicht 12 schließt sich wiederum auf der der äußeren Schicht 11 gegenüberliegenden Seite eine als innere Schicht 13 wirkende zweite Schicht 13 an. Die innere Schicht 13 besteht hierbei insbesondere ebenfalls aus Polyethylenterephthalat (PET). Wesentlich hierbei ist, dass die Siegelschicht 12 einen niedrigeren Schmelzpunkt ausweist als die innere Schicht 13.

In der Praxis zufriedenstellende Ergebnisse für Verpackungen 1 wurden erzielt, wenn die Schichtdicke der Siegelschicht 12 zwischen 30µm und 100µm, bevorzugt zwischen 50µm und 90µm aufweist und die innere Schicht 13 eine Schichtdicke von 8µm bis 20µm, bevorzugt zwischen 12µm und 18µm aufweist.

Insbesondere kann es auch vorgesehen sein, dass zwischen der äußeren Schicht 11 und der Siegelschicht 13 wenigstens eine zusätzliche Barriereschicht 15 angeordnet ist, wie dies anhand der Fig. 3 erkennbar ist. Als Material für die Barriereschicht 15 kommen dabei alle, bei Verbundfolien gebräuchlichen Barriereschichten 15 in Frage. Auch kann die Verbundfolie 10 insgesamt aus einer Vielzahl von miteinander verbundenen Schichten bestehen. Wesentlich ist lediglich, dass die innere, mit dem Lebensmittel in Kontakt stehende Schicht 13 einen höheren Schmelzpunkt aufweist als die mit dieser zusammenwirkende Siegelschicht 12.

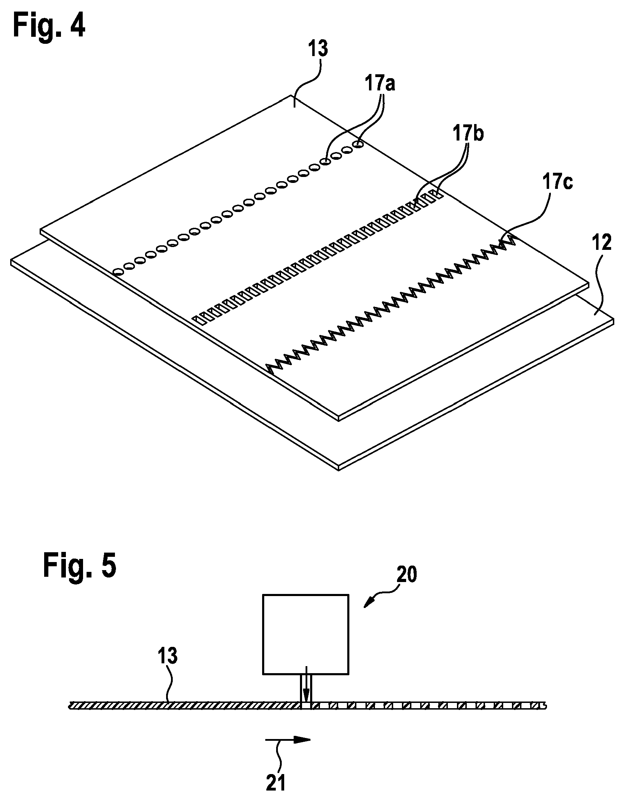

Erfindungswesentlich ist, dass die innere Schicht 13 mit wenigstens einer Perforation bzw. wenigstens einer Durchgangsöffnung 17 ausgebildet ist. In der Fig. 4 sind beispielhaft drei verschiedene Formen von Durchgangsöffnungen 17 dargestellt. So sind die Durchgangsöffnungen 17a als runde Durchgangsöffnungen 17a ausgebildet, während die Durchgangsöffnungen 17b einen rechteckförmigen Querschnitt aufweisen. Die Durchgangsöffnung 17c ist als Zickzack-Muster ausgebildet. Bei Verwendung von Durchgangsöffnungen 17a und 17b sind diese insbesondere als eine Vielzahl von nebeneinander bzw. hintereinander angeordneten Durchgangsöffnungen 17a bzw. 17b angeordnet bzw. ausgebildet.

Bei der Formung der Verpackungen 1 mittels der erfindungsgemäßen Verbundfolie 10 ist es wesentlich, dass entsprechend der Fig. 3 (hier ist der Fall dargestellt, bei der eine einzige Verbundfolie 10 verwendet wird) diese derart im Bereich einer Kante 18 umgefaltet wird, dass die Durchgangsöffnungen 17 der gegenüberliegenden Abschnitte der inneren Schicht 13 fluchtend zueinander angeordnet sind. Zwischen den Durchgangsöffnungen 17 und der Kante 18 ist eine eine Zone 19 ausgebildet, in der keine Durchgangsöffnungen 17 ausgebildet sind.

In dem in der Fig. 3 dargestellten Ausführungsbeispiel ist nur ein Bereich mit zwei fluchtend angeordneten Reihen von Durchgangsöffnungen 17 dargestellt. Selbstverständlich ist es auch im Rahmen der Erfindung, mehrere derartige Reihen von Durchgangsöffnungen 17 parallel zur Kante 18 anzuordnen.

Bei der Bildung der Schweißnähte 2, 3 im Bereich der Durchgangsöffnungen 17 wird mittels des erwähnten Siegel- bzw. Schweißwerkzeuges Wärme und Druck in den Bereich der Schweißnaht 2 bzw. 3 eingebracht. Hierbei wird die Siegelschicht 12 entsprechend der Darstellung der Fig. 2 derart aufgeschmolzen, dass Material aus der Siegelschicht 12 durch die Durchgangsöffnung 17 gelangt und sich insbesondere mit Material der Siegelschicht 12 auf der gegenüberliegenden Seite vereint und hierbei eine feste Verbindung eingeht.

Weiterhin erfolgt in Abhängigkeit der Schweißparameter und der Ausbildung des Siegelwerkzeuges ein Aufbrechen bzw. Aufweiten der Durchgangsöffnungen 17 derart, dass vorzugsweise eine streifenförmige Verbindungszone ausgebildet wird, in der die beiden Siegelschichten 12 eine vollflächige, dichte Verbindung eingehen, so dass ggf. auf ein Umfalten der Verbundfolie 10 zum Bilden einer Kante 18 verzichtet werden kann.

In der Fig. 5 ist stark vereinfacht eine Einrichtung 20 zum Herstellen von Durchgangsöffnungen 17 in der inneren Schicht 13 dargestellt, die Teil einer (nicht dargestellten) Vorrichtung zum Herstellen der Verbundfolie 10 ist. Hierbei wird die innere Schicht 13 entsprechend des Pfeils 21 taktweise oder kontinuierlich unterhalb der Einrichtung 20 entlanggefördert, wobei die Einrichtung 20 in der inneren Schicht 13 die Durchgangsöffnungen 17 ausbildet. Als Einrichtung 20 kommt hierbei insbesondere eine Laserstrahleinrichtung, eine Stanzeinrichtung oder eine wenigstens ein Messer aufweisende Einrichtung 20 in Frage. Die so ausgebildete innere Schicht 13 wird anschließend in an sich bekannter Art und Weise mittels der Vorrichtung mit der äußeren Schicht 11, der Siegelschicht 12 sowie ggf. mit der Barriereschicht 15 verbunden, wobei die Siegelschicht 12 zumindest den Bereich der Durchgangsöffnungen 17 überdeckt. Auch sind andere Einrichtungen 20 denkbar. So können beispielsweise mittels einer Lasereinrichtung in eine bereits gefertigte Verbundfolie 10 nachträglich die Durchgangsöffnungen 17 ausgebildet werden und dabei ggf. zusätzliche Schwächungen an der Verbundfolie, zum Beispiel zum vereinfachten Anbringen einer Ausgießöffnung oder deren vereinfachten Handhabung ausgebildet werden.

## Patentansprüche

1. Verfahren zur Herstellung eines aus wenigstens einer Verbundfolie (10) bestehenden Folienverbundes (1), insbesondere einer Verpackung, unter Verwendung einer Verbundfolie (10) mit wenigstens einer aus siegelbarem Material bestehenden Siegelschicht (12), die zumindest mittelbar mit einer als Außenschicht wirkenden ersten Schicht (11) verbunden ist, wobei die Siegelschicht (12) einen niedrigeren Schmelzpunkt aufweist als die erste Schicht (11), wobei
auf der der ersten Schicht (11) abgewandten Seite der Siegelschicht (12) in Wirkverbindung mit der Siegelschicht (12) eine als innere Schicht wirkende zweite Schicht (13) angeordnet ist, wobei die zweite Schicht (13) einen höheren Schmelzpunkt aufweist als die Siegelschicht (12) und wobei die zweite Schicht (13) wenigstens eine Durchgangsöffnung (17; 17a bis 17c) aufweist, die von der Siegelschicht (12) überdeckt ist, wobei zwei Abschnitte der wenigstens einen Verbundfolie (10) gegeneinander gelegt werden und durch Einbringen von Wärme und Druck wenigstens eine Siegelschicht (12) aktiviert wird, so dass die Siegelschichten (12) der beiden Abschnitte in Wirkverbindung geraten und die beiden gegeneinander gelegten Abschnitte miteinander verbinden,
**dadurch gekennzeichnet, dass**
die Einbringung der Wärme bzw. des Drucks in die wenigstens eine Verbundfolie (10) zumindest eine Verdrängung des Materials der Siegelschicht (12) in den Bereich von zueinander in Überdeckung ausgerichteten Durchgangsöffnungen (17; 17a bis 17c) von als inneren Schichten wirkenden zweiten Schichten (13) bewirkt, derart, dass das Material der Siegelschichten (12) in Wirkverbindung gelangt.

2. Verfahren nach Anspruch 1,
**dadurch gekennzeichnet, dass**
die Durchgangsöffnungen (17; 17a bis 17c) der inneren Schicht (13) beim Versiegeln unter Einwirkung von Wärme und Druck sich in ihrer Ausdehnung aufweiten bzw. aufbrechen und dabei insbesondere eine vollflächige, dichte Verbindung ausbilden.

3. Verfahren nach Anspruch 1 oder 2,
**dadurch gekennzeichnet,**
**dass** bei Verwendung einer einzigen Verbundfolie (10) diese im Bereich einer streifenförmigen Zone (19) ohne Durchgangsöffnungen (17; 17a bis 17c) in der zweiten Schicht (13) unter Bildung einer Faltkante (18) gefaltet und gegeneinander gelegt wird, so dass die Durchgangsöffnungen (17; 17a bis 17c) fluchtend zueinander angeordnet sind.

4. Verfahren nach einem der vorhergehenden Ansprüche, **gekennzeichnet durch** Verwendung einer Verbundfolie (10), bei der die zweite Schicht (13) aus Polyethylenterephthalat (PET) besteht.

5. Verfahren nach einem der vorhergehenden Ansprüche, **gekennzeichnet durch** Verwendung einer Verbundfolie (10), bei der zwischen der Siegelschicht (12) und der ersten Schicht (11) zumindest eine als Barriereschicht wirkende dritte Schicht (15) angeordnet ist.

6. Verfahren nach einem der vorhergehenden Ansprüche, **gekennzeichnet durch** Verwendung einer Verbundfolie (10), bei der in der zweiten Schicht (13) eine Vielzahl von Durchgangsöffnungen (17; 17a bis 17c) ausgebildet sind, die in gleichmäßigen Abständen zueinander angeordnet sind.

7. Verfahren nach Anspruch 6, **gekennzeichnet durch** Verwendung einer Verbundfolie (10), bei der zumindest zwei Reihen von Durchgangsöffnungen (17; 17a bis 17c) vorgesehen sind, wobei zwischen den Reihen eine streifenförmige Zone (19) ohne Durchgangsöffnungen (17; 17a bis 17c) ausgebildet ist und wobei die beiden Reihen von Durchgangsöffnungen (17; 17a bis 17c) derart zueinander ausgerichtet sind, dass bei einem Umfalten der Verbundfolie (10) im Bereich der streifenförmigen Zone (19) und Gegeneinanderlegen der beiden Abschnitte unter Bildung einer Faltkante (18) die Durchgangsöffnungen (17; 17a bis 17c) der beiden gegeneinander gelegten zweiten Schichten (13) in Überdeckung zueinander angeordnet sind.

8. Verfahren nach einem der vorhergehenden Ansprüche, **gekennzeichnet durch** Verwendung einer Verbundfolie (10), bei der die Siegelschicht (12) aus Polyethylen (PE) besteht und eine Schichtdicke von 30µm bis 100µm, bevorzugt zwischen 50µm und 90µm aufweist und bei der die zweite Schicht (13) eine Dicke von 8µm bis 20µm, bevorzugt zwischen 12µm und 18µm aufweist.

## Claims

1. Method of producing a composite film arrangement (1), in particular a pack, comprising at least one composite film (10), use being made of a composite film (10) with at least one sealing layer (12), which consists of sealable material and is connected, at least indirectly, to a first layer (11), which acts as an outer layer, wherein the sealing layer (12) has a lower melting point than the first layer (11), wherein that side of the sealing layer (12) which is directed away from the first layer (11) has arranged on it, in operative connection with the sealing layer (12), a second layer (13), which acts as an inner layer, wherein the second layer (13) has a higher melting point than the sealing layer (12), and wherein the second layer (13) has at least one through-opening (17; 17a to 17c), which is overlapped by the sealing layer (12), wherein two portions of the at least one composite film (10) are positioned against one another and at least one sealing layer (12) is activated by the introduction of heat and pressure, and therefore the sealing layers (12) of the two portions come into operative connection and connect together the two portions which are positioned against one another,
**characterized in that**
the introduction of the heat and/or of the pressure into the at least one composite film (10) brings about at least one displacement of the material of the sealing layer (12) into the region of overlapping through-openings (17; 17a to 17c) of second layers (13), which act as inner layers, such that the material of the sealing layers (12) ends up in operative connection.

2. Method according to Claim 1,
**characterized in that**,
during the operation of sealing under the action of heat and pressure, the through-openings (17; 17a to 17c) of the inner layer (13) widen or rupture and, in the process, form in particular a full-surface-area, sealed connection.

3. Method according to Claim 1 or 2,
**characterized**
**in that**, if use is made of a single composite film (10), the latter is folded, in the region of a strip-form zone (19) without through-openings (17; 17a to 17c) in the second layer (13), to form a folding edge (18) and the folded portions are positioned against one another such that the through-openings (17; 17a to 17c) are in alignment with one another.

4. Method according to one of the preceding claims,
**characterized**
**by** the use of a composite film (10) in which the second layer (13) consists of polyethylene terephthalate (PET).

5. Method according to one of the preceding claims,
**characterized**
**by** the use of a composite film (10) in which at least one third layer (15), which acts as a barrier layer, is arranged between the sealing layer (12) and the first layer (11).

6. Method according to one of the preceding claims,
**characterized**
**by** the use of a composite film (10) in which the second layer (13) has a multiplicity of through-openings (17; 17a to 17c) which are spaced apart from one another at uniform intervals.

7. Method according to Claim 6, **characterized**
**by** the use of a composite film (10) in which at least two rows of through-openings (17; 17a to 17c) are provided, wherein a strip-form zone (19) without through-openings (17; 17a to 17c) is formed between the rows, and wherein the two rows of through-openings (17; 17a to 17c) are oriented in relation to one another such that, when the composite film (10) is folded over in the region of the strip-form zone (19), and the two portions are positioned against one another, to form a folding edge (18), the through-openings (17; 17a to 17c) of the two second layers (13), which are positioned against one another, overlap.

8. Method according to one of the preceding claims,
**characterized**
**by** the use of a composite film (10) in which the sealing layer (12) consists of polyethylene (PE) and has a layer thickness of 30 µm to 100 µm, preferably between 50 µm and 90 µm, and in which the second layer (13) has a thickness of 8 µm to 20 µm, preferably between 12 µm and 18 µm.

## Revendications

1. Procédé de fabrication d'un composite de films (1) constitué d'au moins un film composite (10), en particulier d'un emballage, avec utilisation d'un film composite (10) avec au moins une couche de soudage (12) constituée d'un matériau soudable, qui est assemblée au moins indirectement à une première couche (11) opérant comme couche extérieure, dans lequel la couche de soudage (12) présente un point de fusion plus bas que la première couche (11),
dans lequel une deuxième couche (13) opérant comme couche intérieure est disposée en liaison active avec la couche de soudage (12) sur le côté de la couche de soudage (12) détourné de la première couche (11), dans lequel la deuxième couche (13) présente un point de fusion plus élevé que la couche de soudage (12) et dans lequel la deuxième couche (13) présente au moins une ouverture de passage (17; 17a à 17c), qui est recouverte par la couche de soudage (12), dans lequel deux parties dudit au moins un film composite (10) sont posées l'une contre l'autre et au moins une couche de soudage (12) est activée par application de chaleur et de pression, de telle manière que les couches de soudage (12) des deux parties se lient activement et que les deux parties posées l'une contre l'autre s'assemblent l'une à l'autre,
**caractérisé en ce que** l'application de la chaleur ou de la pression dans ledit au moins un film composite (10) provoque au moins un refoulement du matériau de la couche de soudage (12) dans la région d'ouvertures de passage alignées en recouvrement l'un avec l'autre (17; 17a à 17c) de deuxièmes couches (13) opérant comme couches intérieures, de telle manière que le matériau des couches de soudage (12) entre en liaison active.

2. Procédé selon la revendication 1, **caractérisé en ce que** les ouvertures de passage (17; 17a à 17c) de la couche intérieure (13) s'élargissent ou se rompent dans leur extension lors du soudage sous l'action de la chaleur et de la pression et forment en l'occurrence un assemblage étanche en particulier sur toute la surface.

3. Procédé selon la revendication 1 ou 2, **caractérisé en ce que**, lors de l'utilisation d'un seul film composite (10), on le plie dans la région d'une zone en forme de bande (19) sans ouvertures de passage (17; 17a à 17c) dans la deuxième couche (13) en formant un bord de pli (18) et on applique ses côtés l'un sur l'autre, de telle manière que les ouvertures de passage (17; 17a à 17c) soient disposées en alignement l'une avec l'autre.

4. Procédé selon l'une quelconque des revendications précédentes, **caractérisé par** l'utilisation d'un film composite (10), dans lequel la deuxième couche (13) est constituée de polyéthylène téréphtalate (PET).

5. Procédé selon l'une quelconque des revendications précédentes, **caractérisé par** l'utilisation d'un film composite (10), dans lequel au moins une troisième couche (15) opérant comme couche de barrière est disposée entre la couche de soudage (12) et la première couche (11).

6. Procédé selon l'une quelconque des revendications précédentes, **caractérisé par** l'utilisation d'un film composite (10), dans lequel une multiplicité d'ouvertures de passage (17; 17a à 17c) sont formées dans la deuxième couche (13), lesquelles sont disposées à égales distances les unes des autres.

7. Procédé selon la revendication 6, **caractérisé par** l'utilisation d'un film composite (10), dans lequel il est prévu au moins deux rangées d'ouvertures de passage (17; 17a à 17c), dans lequel une zone en forme de bande (19) sans ouvertures de passage (17; 17a à 17c) est formée entre les rangées et dans lequel les deux rangées d'ouvertures de passage (17; 17a à 17c) sont alignées l'une par rapport à l'autre de telle manière que, lors d'un pliage du film composite (10) dans la région de la zone en forme de bande (19) et la pose des deux parties l'une contre l'autre avec formation d'un bord de pli (18), les ouvertures de passage (17; 17a à 17c) des deux deuxièmes couches (13) posées l'une contre l'autre soient disposées en recouvrement l'une avec l'autre.

8. Procédé selon l'une quelconque des revendications précédentes, **caractérisé par** l'utilisation d'un film composite (10), dans lequel la couche de soudage (12) est constituée de polyéthylène (PE) et présente une épaisseur de couche de 30 µm à 100 µm, de préférence entre 50 µm et 90 µm, et dans lequel la deuxième couche (13) présente une épaisseur de couche de 8 µm à 20 µm, de préférence entre 12 µm et 18 µm.
